# EUROPÄISCHE PATENTSCHRIFT

(11) **EP 0 915 277 B1**
(45) Veröffentlichungstag und Bekanntmachung des Hinweises auf die Patenterteilung: **14.04.2004**
(21) Anmeldenummer: 98119368.3
(22) Anmeldetag: 14.10.1998
(51) Int. Cl.: F16K 31/00, F15B 5/00, F15C 3/14, F15B 13/043

(54) **Piezoventil**
Piezo-electric valve
Vanne pièzo-électrique

(30) Priorität: 15.10.1997 DE 29718306 U
(43) Veröffentlichungstag der Anmeldung: 12.05.1999
(73) Patentinhaber: Bürkert Werke GmbH & Co., D-74653 Ingelfingen (DE)
(72) Erfinder: Kowanz, Bernd Dr., 74613 Öhringen (DE)
(74) Vertreter: Degwert, Hartmut, Dipl.-Phys.

(56) Entgegenhaltungen:
- EP-A- 0 693 788
- DE-A- 4 420 741
- US-A- 4 461 968
- US-A- 4 567 394
- US-A- 5 593 134

## Beschreibung

Die Erfindung betrifft ein Ventil, das ein elektrisches Eingangssignal in ein fluidisches Ausgangssignal umwandelt. Das Ventil enthält eine Piezokeramik, die sich beim Anlegen einer Spannung biegt und einen fluidischen Signalgeber steuert. Insbesondere betrifft die Erfindung ein Ventil mit einer Piezokeramik, die mit einem Signalgeber gekoppelt ist, wobei das Gesamtsystem aus Piezokeramik und Signalgeber jeweils in einer von zwei stabilen Endlagen festgehalten wird.

Biegeaktuatoren und Ventile dieser Art sind bereits bekannt (EP 0 565 510 A2, EP 0 191 011 A1, DE 3 400 645 A1). Sie werden dort eingesetzt, wo eine schnelle Regelung oder geringe Ansteuerenergie zwingend erforderlich ist. Dies sind Anwendungen wie ABS oder die Optik. Wegen der geringen Stromaufnahme sind diese Ventile jedoch auch für den Explosions-Schutz-Bereich oder die Anbindung an die Feldbustechnik geeignet.

Nachteilig an den bekannten Piezo-Ventilen ist, daß aufgrund der negativ verlaufenden Kraft-Weg-Kennlinie (Kraft-Biege-Kennlinie) ein großer Teil der Kraft des Piezoelements beim Betätigen des fluidischen Signalgebers ungenutzt bleibt. Praktisch bedeutet das, daß die Kraft bei größerer Biegung des Piezoelements nicht ausreicht, um den Signalgeber z. B. gegen anstehenden Druck sicher in seiner Endlage zu halten. Größere Piezokeramiken, mit denen dieser Nachteil ausgeschlossen wird, beanspruchen zuviel Platz, um sie in kleinen Ventilbauformen unterzubringen; darüber hinaus sind zum Biegen größerer Piezokeramiken höhere Spannungen erforderlich. Ein weiterer Nachteil ist das materialbedingte Kriechverhalten der Piezokeramik, das auftritt, wenn die Keramik längere Zeit unter mechanischer Belastung gehalten wird.

Um diese Nachteile auszuschalten, wurden bereits in der EP 0 538 236 A1 und DE OS 44 25 078 A1 Lösungen vorgeschlagen. In der EP 0 538 236 A1 wird das Problem der negativ verlaufenden Kraft-Weg-Kennlinie der Piezokeramik dadurch gelöst, daß die Fläche des Ventilsitzes so groß gewählt wird, daß der anstehende Druck die Piezokeramik stromlos auf dem Ventilsitz hält. Eine bleibende Verformung wird dadurch vermieden, daß an das Piezoelement nur dann eine Spannung angelegt werden muß, wenn das Ventil schaltet. In der DE OS 44 25 078 A1 ist ein Biegeaktuator vorgeschlagen, der nach Anlegen einer Spannung durch eine Schnappfeder unterstützt zwischen zwei Endlagen schaltbar ist.

Als Nachteil hat sich bei den in der EP 0 538 236 A1 vorgeschlagenen Piezo-Ventilen herausgestellt, daß festgelegte Druckverhältnisse herrschen müssen, damit das Ventil einwandfrei schaltet und schließt. Darüber hinaus bleiben Einflüsse der Ventilparameter, wie z. B. Reibung in der Lagerstelle oder der Einfluß von Dichtungen, die auf die Biegeeinrichtung wirken, unberücksichtigt. Bei einer Schnappfeder gemäß DE 44 25 078 A1 ist die Federkraft in den Endlagen am geringsten.

Gemäß der Erfindung weist das Ventil eine in einem Gehäuse eingespannte piezoelektrische Lamelle auf, die durch eine angelegte elektrische Spannung eine Biegung erfährt und mit einem freien, zwischen zwei Schaltstellungen beweglichen Ende einen Schließkörper betätigt. Auf das freie Ende der Lamelle wirkt eine Magnetkraft ein, die durch einen in jeder der zwei Schaltstellungen an einem von zwei entgegengesetzten Magnetpolen anliegenden magnetisierbaren Körper bereitgestellt wird. Der Schließkörper steuert den fluidischen Teil des Ventils und kann als Signalgeber bezeichnet werden.

Das erfindungsgemäße Ventil ist dahingehend verbessert, daß die hohe Kraft am Anfang der Biegung gemäß der piezoelektrischen Lamelle ausgenutzt wird, den Signalgeber aus seiner Endlage herauszubringen, so daß dieser daraufhin unterstützt von der geringeren Kraft der piezoelektrischen Lamelle bzw. selbsttätig in die entgegengesetzte Endlage bewegt wird. Durch Kopplung und Zusammenwirken von zwei Hebeln wird bei bevorzugten Ausführungsformen die Kraft-Weg-Kennlinie derart angepaßt, daß sowohl die Höhe der Kraft als auch der Weg der piezoelektrischen Lamelle optimiert wird. Durch diese Kopplung ist die Funktion des Ventils unabhängig von den im Ventil herrschenden Druckverhältnissen. Darüber hinaus werden die genannten Einflüsse der Ventilparameter, Reibung in der Lagerstelle oder der Einfluß von Dichtungen, in einfacher Weise kompensiert.

Aufgrund der vorgeschlagenen Anordnung besteht das Ventil aus einem Piezoantrieb mit einer piezoelektrischen Lamelle, die mit einem Betätigungshebel gekoppelt ist. Dieser Betätigungshebel betätigt auf einer Seite einen fluidischen Signalgeber und ragt auf der gegenüberliegenden Seite mit einem magnetischen Teil zwischen die Schenkel eines Permanantmagnetjochs. Biegt sich die Piezokeramik nach dem Anlegen einer Spannung, ist in der ersten Phase der Biegung die Kraft ausreichend groß, um das Lamellenende von dem Schenkel des Magnetjochs an dem es anliegt, abzureißen. Danach wird das Piezoelement von der magnetischen Kraft des zweiten Schenkels des Magnetjochs unterstützt und bringt die Lamelle in die gegenüberliegende Endlage am zweiten Schenkel. Durch die vorgegebenen mechanischen Anschläge am Magnetjoch und durch die magnetische Krafteinwirkung zwischen dem Lamellenende und dem Magnetjoch wird die mechanische Belastung der Piezokeramik deutlich reduziert und insbesondere das Kriechen unter statischer Belastung verhindert.

Eine weitere Verbesserung des erfindungsgemäßen Ventils läßt sich dadurch erreichen, daß die Lamelle als Hebel benutzt wird, deren Auflager im Gehäuse die beiden Hebelarme derart aufteilt, daß die Kraft so übersetzt wird, daß der kürzere Hebelarm den Signalgeber sicher in seiner Endlage hält.

Geeignet ist ferner auch eine Ausführungsform, bei der der Schnappmechanismus direkt mit der piezoelektrischen Lamelle gekoppelt ist. In diesem Fall kann eine weitere Lamelle als Hebel zum Zweck der günstigen Kraftübertragung zwischen piezoelektrischer Lamelle und Signalgeber verwendet werden.

Eine weitere Ausführungsform sieht vor, den Signalgeber direkt mit der Piezokeramik zu betätigen, d. h. das freie, magnetisierbare Ende der piezoelektrischen Lamelle liegt mit diesem Ende zwischen den Schenkeln des Magnetjochs.

Die Erfindung ist nachstehend anhand der in der anliegenden Zeichnung dargestellten Ausführungsbeispiele näher erläutert. In der Zeichnung zeigt
Fig. 1 einen schematischen Längsschnitt durch eine Ausführungsform des Ventils mit Piezoantrieb und einem Magnetjoch, in dem sich ein Ende eines Betätigungshebels zwischen zwei Endlagen bewegt;
Fig. 2 einen schematischen Längsschnitt durch eine Ausführungsform des Ventils mit Piezoantrieb und einem Magnetjoch, in dem sich die piezoelektrische Lamelle zwischen zwei Endlagen bewegt;
Fig. 3 in einer weiteren Ausführungsform einen schematischen Längsschnitt durch ein direktwirkendes Ventil mit Piezoantrieb.

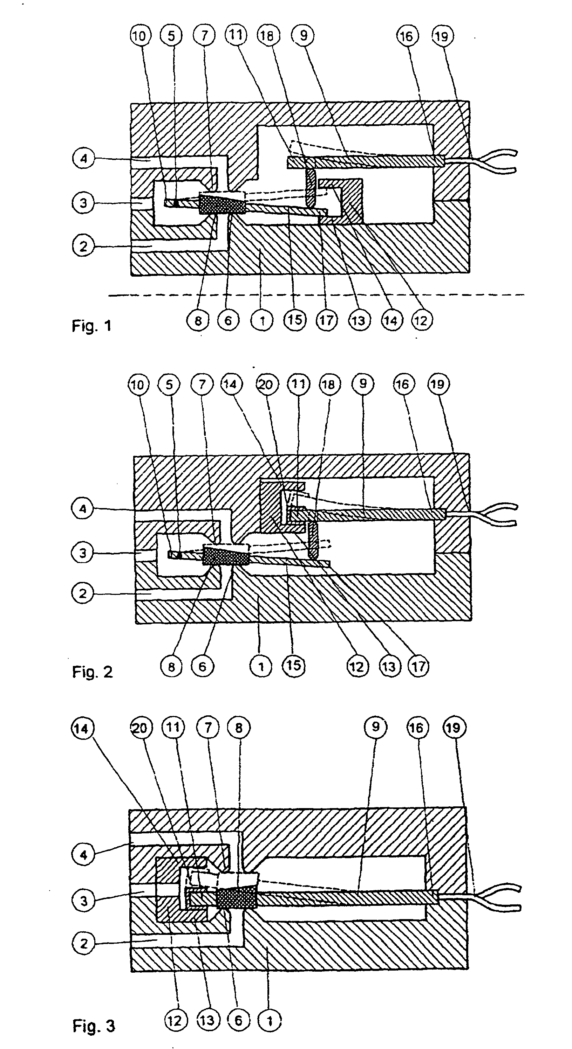

Die in Figur 1 gezeigte Ausführungsform besteht aus einem Ventil mit einem Gehäuse 1 mit drei fluidischen Anschlüssen 2, 3, 4, von denen zwei sich gegenüberliegen und in Ventilsitzen 6, 7 enden. Im Gehäuse 1 befindet sich eine piezoelektrische Lamelle 9 mit herausgeführten Anschlüssen 19 für die elektrische Ansteuerung, welche auf einer Seite des Gehäuses 1 fest eingespannt ist. Die nicht eingespannte Seite 11 der Lamelle 9 ist über ein Kopplungselement 18 mit einem Betätigungshebel 15 aus magnetisierbarem Material verbunden. Das freie Ende 17 des Betätigungshebels 15 ragt zwischen die beiden Schenkel 13, 14 eines Magnetjochs 12 hinein und wird vom unteren Schenkel 13 des Magnetjochs 12 durch magnetische Kraft festgehalten. Am gegenüberliegenden Ende 10 ragt der Betätigungshebel 15 in den fluidischen Teil des Gehäuses 1 hinein und ist an diesem Ende 10 bei 5 drehbar gelagert. Zur wechselseitigen Abdichtung der Ventilsitze 6, 7 der beiden fluidischen Anschlüsse 2, 4 ist ein Schließkörper 8 durch einfaches Aufstecken auf dem Betätigungshebel 15 angebracht. Das Auflager 5 des Betätigungshebels 15 begünstigt eine größtmögliche Kraftübersetzung, damit das Ventil dichtet und auch über einen längeren Zeitraum sicher schließt. Im gezeigten Beispiel ist das Ventil spannungslos, d. h. die Lamelle 9 ist nicht gebogen. Der Schließkörper 8 hält den unteren Ventilsitz 6 geschlossen. Die Ursache hierfür ist die magnetische Kraft am unteren Schenkel 13 des Magnetjochs 12, die am anderen Ende 17 den magnetisierbaren Teil des Betätigungshebels 15 in seiner Lage festhält, d. h. der magnetische Kreis ist zwischen dem unteren Schenkel 13 des Magnetjochs 12 und dem Ende 17 des Betätigungshebels 15 geschlossen.

Wird an den elektrischen Anschlüssen 19 der Lamelle 9 eine Spannung angelegt, erfährt diese eine Biegung in Richtung von dem Hebel 15 fort (gestrichelt gezeichnete Anordnung), wobei die Kraft, die am Anfang der Biegung zur Verfügung steht, größer sein muß als die magnetische Kraft, die den Betätigungshebel 15 am unteren Schenkel 13 des Magnetjochs 12 festhält, um den Betätigungshebel 15 von diesem abzureißen. Mit zunehmender Biegung verringert sich die Kraft, die die Lamelle 9 auf den Betätigungshebel 15 ausüben kann, jedoch nimmt die Kraftwirkung des oberen Schenkels 14 des Magnetjochs 12 immer weiter zu, bis der Betätigunghebel 15 anliegt und der magnetische Kreis zwischen dem oberen Schenkel 14 des Magnetjochs 12 und dem Ende 17 des Betätigungshebels 15 geschlossen ist. Zugleich gibt der Schließkörper 8 den unteren Sitz 6 des fluidischen Ventilanschlusses 2 frei und schließt den oberen Ventilsitz 7.

Die in Figur 2 gezeigte Ausführungsform unterscheidet sich von der in Figur 1 beschriebenen lediglich dadurch, daß das freie Ende 11 der Lamelle 9 eine magnetisierbare Ummantelung 20 aufweist, die zwischen die beiden Schenkel 13, 14 des Magnetjochs 12 hineinragt und dort zwischen zwei Endlagen hin und her bewegt werden kann. Im spannungslosen Zustand liegt die Lamelle 9 am unteren Schenkel 13 des Magnetjochs 12 an und wird von diesem durch magnetische Krafteinwirkung festgehalten. Der mit der Lamelle 9 gekoppelte Betätigungshebel 15 ist an dem gegenüberliegenden Ende 10 bei 5 drehbar gelagert. Das auf den Betätigungshebel 15 aufgesteckte Dichtelement 8 schließt den unteren Sitz 6 des fluidischen Ventilanschlusses 4. Nach dem Anlegen einer Spannung biegt sich die Lamelle 9 anfangs mit großer Kraft in Richtung des oberen Schenkels 14 des Magnetjochs 12 und wird von diesem angezogen, worauf der Schließkörper 8 den unteren Sitz 6 des fluidischen Anschlusses 2 freigibt und den oberen Sitz 7 des fluidischen Anschlusses 4 abdichtet.

Die in Figur 3 gezeigte Ausführungsform zeigt ein direktwirkendes Ventil mit Piezoantrieb im spannungsfreien Zustand, dessen Gehäuse 1 mit drei fluidischen Anschlüssen 2, 3, 4 versehen ist. Eine piezoelektrische Lamelle 9 ist auf ihrer einen Seite 16 eingespannt und hat an diesem Ende 16 Anschlüsse 19 zur elektrischen Ansteuerung. Im gegenüber liegenden Teil des Gehäuses 1 ist ein Magnetjoch 12 eingebaut, zwischen dessen Schenkeln 13, 14 die Lamelle 9 mit ihrem zweiten Ende 11 hineinragt. Dieses Ende 11 der Lamelle 9 ist mit magnetisierbarem Material beschichtet und wird in der Zeichnung am unteren Schenkel 13 des Magnetjochs 12 mit magnetischer Kraft festgehalten. Ein auf die Lamelle 9 aufgesteckter Schließkörper 8 dichtet den unteren Sitz 6 des Ventilanschlusses 2 ab. Wird eine Spannung an die Lamelle 9 gelegt, biegt sie sich an ihrem freien Ende 11 nach oben, wie gestrichelt gezeigt, und wird vom oberen Schenkel 14 des Magnetjochs 12 angezogen, worauf der obere Sitz 6 des fluidischen Anschlusses 2 geschlossen und der untere Sitz 7 des Anschlusses 4 freigegeben wird.

Bei allen gezeigten Ausführungsformen ist das Magnetjoch allgemein U-förmig und hat die Funktion eines mechanischen Anschlags, der die Endlagen der piezoelektrischen Lamelle 9 bzw. des Betätigungshebels 15 bestimmt.

## Patentansprüche

1. Ventil mit einem Gehäuse (1) und einer im Gehäuse eingespannten piezoelektrischen Lamelle (9), die durch eine angelegte elektrische Spannung eine Biegung erfährt und mit einem freien, zwischen zwei Schaltstellungen beweglichen Ende (11) einen den fluidischen Teil des Ventils steuernden Schließkörper (8) betätigt, **dadurch gekennzeichnet, daß** auf das freie Ende (11) der Lamelle (9) eine Magnetkraft einwirkt, die durch einen in jeder der zwei Schaltstellungen an einem von zwei entgegengesetzten Magnetpolen (13, 14) anliegenden magnetisierbaren Körper (17; 20) bereitgestellt wird.

2. Ventil nach Anspruch 1, **dadurch gekennzeichnet, daß** ein Betätigungshebel (15) im Gehäuse an einem ersten Ende (10) schwenkbar gelagert ist, an seinem zweiten, freien Ende (17) mit dem freien Ende der piezoelektrischen Lamelle (9) gekoppelt ist und zwischen seinen Enden den Schließkörper (8) trägt.

3. Ventil nach Anspruch 2, **dadurch gekennzeichnet, daß** der Betätigungshebel (15) durch ein Kopplungselement (18) mit der piezoelektrischen Lamelle (9) starr gekoppelt ist.

4. Ventil nach Anspruch 3, **dadurch gekennzeichnet, daß** das Kopplungselement (18) aus magnetisierbarem Material besteht.

5. Ventil nach Anspruch 2 oder 3, **dadurch gekennzeichnet, daß** der magnetisierbare Körper (17) am freien Ende des Betätigungshebels (15) angeordnet ist.

6. Ventil nach Anspruch 2 oder 3, **dadurch gekennzeichnet, daß** der Betätigungshebel (15) wenigstens teilweise aus einem magnetisierbaren Material gebildet ist.

7. Ventil nach Anspruch 1 oder 2, **dadurch gekennzeichnet, daß** der magnetisierbare Körper (20) am freien Ende der piezoelektrischen Lamelle (9) angeordnet ist.

8. Ventil nach einem der vorstehenden Ansprüche, **dadurch gekennzeichnet, daß** der Schließkörper zwischen zwei einander gegenüberliegenden Dichtsitzen (6, 7) beweglich ist.

9. Ventil nach einem der vorstehenden Ansprüche, **dadurch gekennzeichnet, daß** die Magnetpole (13, 14) an den zwei einander im Abstand gegenüberliegenden Schenkeln eines U-förmigen magnetischen Magnetjochs (12) gebildet sind.

## Claims

1. A valve comprising a housing (1) and a piezoelectric lamina (9) which is clamped in the housing and undergoes bending caused by an electric voltage applied and has a free end (11) movable between two switching positions and actuating a closing body (8) controlling the fluidic part of the valve, **characterized in that** the free end (11) of the lamina (9) is acted on by a magnetic force which is provided by a magnetizable body (17; 20) resting against one of two opposite magnetic poles (13, 14) in each of the two switching positions.

2. The valve according to claim 1, **characterized in that** an actuating lever (15) in the housing is pivotally mounted at a first end (10), is coupled at its second, free end (17) to the free end of the piezoelectric lamina (9), and carries the closing body (8) between its ends.

3. The valve according to claim 2, **characterized in that** the actuating lever (15) is rigidly coupled to the piezoelectric lamina (9) by a coupling member (18).

4. The valve according to claim 3, **characterized in that** the coupling member (18) consists of a magnetizable material.

5. The valve according to claim 2 or 3, **characterized in that** the magnetizable body (17) is arranged at the free end of the actuating lever (15).

6. The valve according to claim 2 or 3, **characterized in that** the actuating lever (15) is made at least partly from a magnetizable material.

7. The valve according to claim 1 or 2, **characterized in that** the magnetizable body (20) is arranged at the free end of the piezoelectric lamina (9).

8. The valve according to any of the preceding claims, **characterized in that** the closing body is movable between two sealing seats (6, 7) arranged opposite each other.

9. The valve according to any of the preceding claims, **characterized in that** the magnetic poles (13, 14) are formed on the two legs, arranged in an opposite, spaced relationship, of a U-shaped magnetic magnet yoke (12).

## Revendications

1. Valve comportant un boîtier (1) et une lamelle piézoélectrique (9) qui est serrée dans le boîtier et qui subit une flexion causée par une tension électrique appliquée et qui actionne, par une extrémité (11) libre déplaçable entre deux positions de commutation, un corps de fermeture (8) commandant la partie fluidique de la valve, **caractérisée en ce que** sur l'extrémité (11) libre de la lamelle (9) agit une force magnétique qui est fournie par un corps (17 ; 20) magnétisable reposant sur un de deux pôles magnétiques (13, 14) opposés, dans chacune des deux positions de commutation.

2. Valve selon la revendication 1, **caractérisée en ce qu'**un levier d'actionnement (15) dans le boîtier (1) est monté à pivotement à une première extrémité (10), est couplé, à sa deuxième extrémité (17) libre, avec l'extrémité libre de la lamelle piézoélectrique (9) et porte le corps de fermeture (8) entre ses extrémités.

3. Valve selon la revendication 2, **caractérisée en ce que** le levier d'actionnement (15) est couplé de manière rigide avec la lamelle piézoélectrique (9) au moyen d'un élément de couplage (18).

4. Valve selon la revendication 3, **caractérisée en ce que** l'élément de couplage (18) est en un matériau magnétisable.

5. Valve selon la revendication 2 ou 3, **caractérisée en ce que** le corps (17) magnétisable est agencé à l'extrémité libre du levier d'actionnement (15).

6. Valve selon la revendication 2 ou 3, **caractérisée en ce que** le levier d'actionnement (15) est formé au moins partiellement par un matériau magnétisable.

7. Valve selon la revendication 1 ou 2, **caractérisée en ce que** le corps magnétisable (20) est agencé à l'extrémité libre de la lamelle piézoélectrique (9).

8. Valve selon l'une des revendications précédentes, **caractérisée en ce que** le corps de fermeture est déplaçable entre deux sièges d'étanchéité (6, 7) opposés l'un à l'autre.

9. Valve selon l'une des revendications précédentes, **caractérisé en ce que** les pôles magnétiques (13, 14) sont formés sur les deux branches opposées à distance l'une de l'autre, d'une culasse magnétique (12) en forme de U.
